Europäisches Patentamt

European Patent Office

Office européen des brevets

(19)

(11) Publication number: **0 115 924**
**A1**

# EUROPEAN PATENT APPLICATION

(21) Application number: **84300324.5**

(51) Int. Cl.³: **H 04 M 15/30**

(22) Date of filing: **19.01.84**

(30) Priority: **19.01.83 GB 8301421**

(71) Applicant: **RATHDOWN INDUSTRIES LIMITED, Goodwood Works 17 London Road, Ascot Berkshire, SL5 7EP (GB)**

(43) Date of publication of application: **15.08.84 Bulletin 84/33**

(72) Inventor: **Fewings, Donald Ivor, Willow House Old Green Lane, Camberley Surrey (GB)**

(84) Designated Contracting States: **BE DE GB**

(74) Representative: **MATTHEWS HADDAN & CO, Haddan House 33 Elmfield Road, Bromley, Kent BR1 1SU (GB)**

(54) **Telephone call cost indicator.**

(57) A telephone call cost indicator system includes an arrangement 10, 11 for receiving dialled telephone number information and providing the more significant digits therefrom to access related addresses in a memory 12 which stores appropriate charge codes. Detectors 26, 27, 28 determine the start and termination of the call. An internal clock 14 and rate memory 15 determine whether cheap or full charge rates apply for example. A computation unit 19 determines the cost of the call from all these variables as the call progresses and this information is available to a display 22.

EP 0 115 924 A1

TITLE:  TELEPHONE CALL COST INDICATOR

The invention relates to a cost indicator for telephone calls.

As the costs associated with telephone calls are consistently rising, there is a requirement for a device that can estimate the cost of individual calls as they are proceeding, to discourage lengthy calls or alternatively to provide cost information, where the call is to be charged to a third party for example.

In the past, devices have been provided which generally are of the simple timer type which count up the number of seconds elapsed once they were actuated.

Other more complex devices, require several manual operations each time calls are made in order to estimate costs.  These devices are not connected to the telephone circuit in any way.

In the UK telephone network, for example, the exchange utilizes electro-mechanical counters which are updated by rate pulses also produced in the exchange. This information is not presented to the caller, except when periodic bills are sent out.

A system sometimes available to a caller is known as Subscribers Private Metering which uses pulses (e.g., 50 Hz or 12 KHz) from the exchange, down the line to the subscriber to allow metering of calls to be effected.  However, this system is not generally available because it requires specific conditions and equipment which may not always be present.

The present invention is directed to a system which provides accurate call cost estimation without the need for specific equipment in the exchange or expensive modification of connections between subscriber and exchange.

According to the invention there is provided a telephone indicator system associated with call costs and comprising:-

means for receiving information pertaining to a telephone number dialled;

means for determining from said number information, the relevant charge code associated with said number;

means for identifying the current charge rate pertaining to that time of day;

means for monitoring the duration of said call;

means for computing the estimated cost pertaining to that call;

means for producing an indication related to the call cost, and wherein said charge determining means includes a memory having a plurality of storage locations for retaining information pertaining to the relevant charge codes obtaining for the time being, said memory addresses being arranged whereby at least some location addresses correspond to and are defined by at least part of the number sequence taken from the dialled telephone number.

The system may include means for totalling the cost of at least one call and providing this information in visual form.

Means may be provided for providing auxiliary visual information.

The charge 'code' may include any charge letter, band or other mechanism for indicating the charge structure.

The number 'dialled' may be associated with dialling, push button or other suitable entry device.

The invention will now be described by way of example with reference to the accompanying drawings in which :-

FIGURE 1 shows an embodiment of the present invention shown in block diagram form;

FIGURE 2 shows the duration control of Figure 1 in more detail;

FIGURE 3 shows a preferred embodiment of the code conversion store of Figure 1;

FIGURE 4 shows a suitable keyboard layout;

FIGURE 5 shows a micro-processor based embodiment; and

FIGURE 6 shows a flow chart associated with the Figure 4 system.

FIGURE 7 shows an embodiment of the call cost indicator associated with a separate telephone instrument.

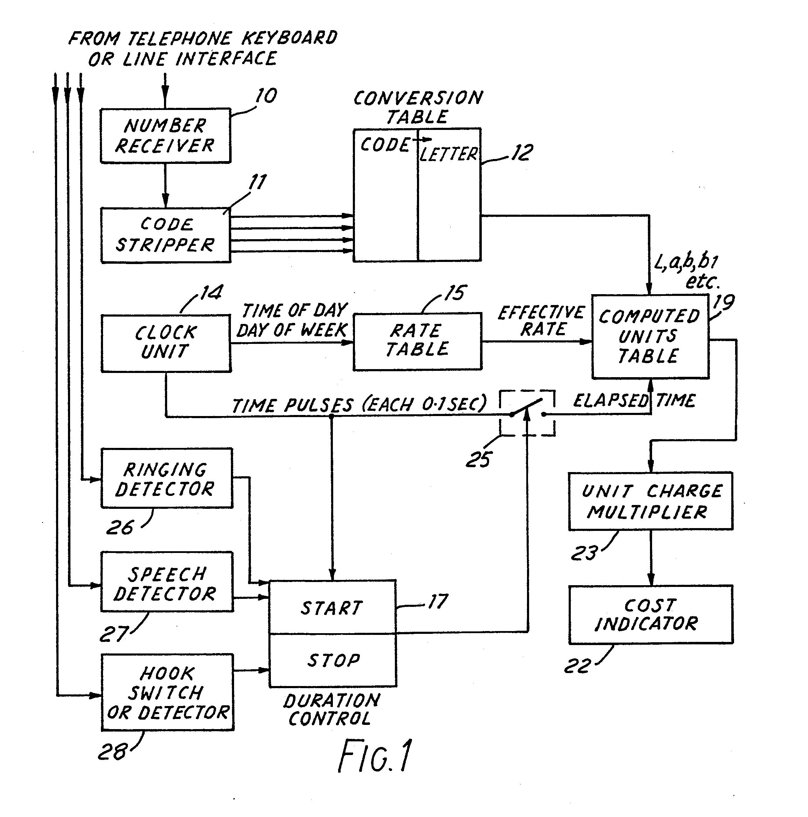

An embodiment of the system of the present invention is shown in Figure 1. The system is sufficiently intelligent to work out call costs merely from the number dialled assuming sufficient charge data has been previously entered, as described in more detail below.

The incoming information, from the telephone keyboard or line interface is captured by the receiver block 10 which may comprise a pulse counter with associated inter-digit pause detector, or more simply a register. Thus a subscriber on 'dialling' a number using the keyboard will simultaneously automatically enter data into receiver 10.

The received number data is modified by code stripper 11 which passes on only the most significant digits so that this can be used later to identify whether the call is local, international or a trunk call. This stripped information passes to the charge letter determining unit, which in this embodiment is a conversion table (LUT) 12 provided by a RAM for example. Thus the code is entered into table 12 and the pertinent charge letter - e.g., L, a, b, (or charge band 1, 2 etc., if an international call) is assigned to the data. This charge letter is one of the variables used in the cost computation and is passed for calculation in computed units table 19, which again

0115924

-5-

may comprise a RAM.

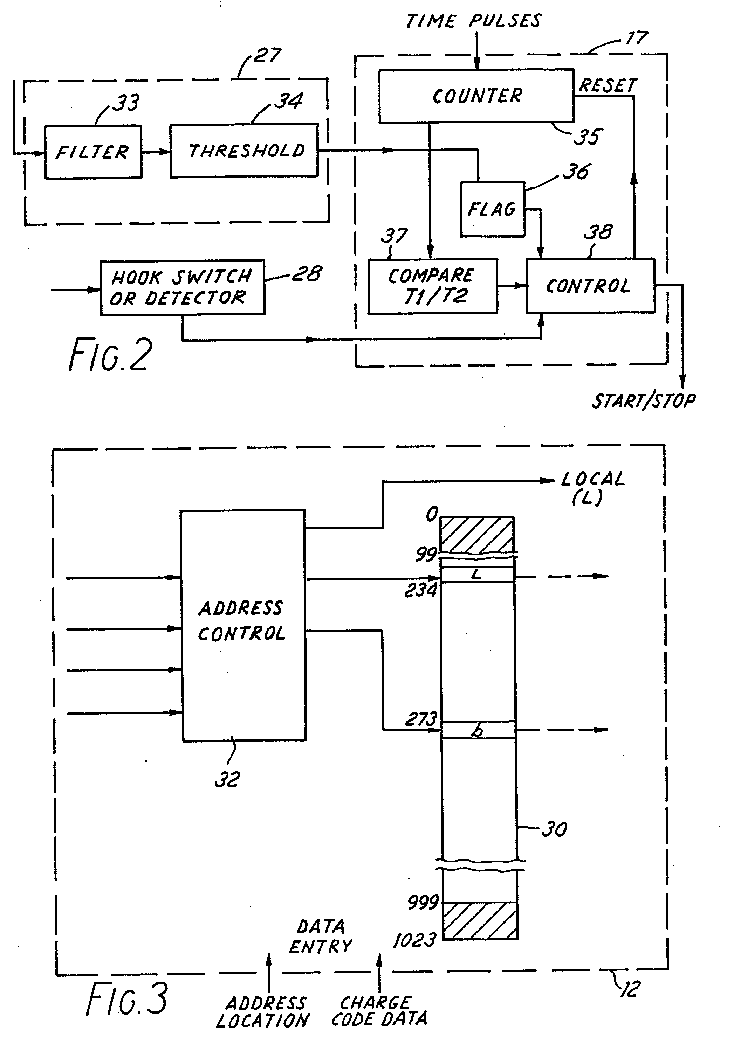

Details of current charge rate - e.g., cheap rate, standard or peak, also is required and this is automatically provided by means of blocks 14 and 15. The clock unit 14 once set provides time of day, and day of the week information for use by rate table block 15 (e.g., RAM) to determine whether the rate to be charged is standard, peak or cheap rate. Additionally, time pulses are produced (e.g., every 0.1 second) which are also passed to block 19 via switch 25 to increment the calculated time of the call. The call duration is determined by duration control block 17 which causes switch 25 to be closed during the chargeable portion of the call. The start of the call in this embodiment is deemed to have occurred after a fixed period following commencement of the ringing tone. This tone is noted by detector 26 which typically includes a counter device to trigger the start operation together with closure of switch 25 after a fixed delay period (e.g., 15 seconds) which is chosen as the statistical average time after ringing that a call is answered. Time pulses are conveniently available from clock block 14. A speech detector 27 is also provided which adds a more sophisticated aspect to the device and typically comprises a filter and threshold device. On detection of voice signals indicative that the subscriber is connected, the switch 25 is enabled if this period (CSA) is shorter than the delay following the ringing sequence to provide enhanced accuracy as to the moment that the call is connected and thus the commencement of the charging period. The voice detector in practice detects the calling parties voice rather than the called parties voice as local voice signal quality is much greater than the remote signal which may fail to give the desired indication. Local voice normally commences almost concurrently with remote voice reception. Duration control block 17 is a bistable device which is triggered into the Stop mode when the 'on hook' switch 28 in the telephone is closed so inhibiting switch 25 thus preventing further time pulses passing for computation. An example of a suitable control configuration is shown in Figure 2.

The speech detector 27 comprises a filter 33 and threshold device 34 to produce information that speech is present. The counter 35 within control block 17 receives the time pulses when enabled by the ringing detector or alternatively can be enabled following the cessation of dialling as determined by the code stripper 11. The count from counter 35 is continually compared in comparator 37 to determine when the period $T_1$ or $T_2$ has elapsed and when this happens an output to control 38 allows the start/stop operation for switch 25 to be controlled. Time $T_1$ is a statistical period corresponding to the mean point after dialling (or commencement of ringing) when the called party would answer. $T_2$ is the time where at least 95% of all calls would have been answered. These two values define a reasonable time band in which calls can be expected to be answered. However, the presence of voice detector 27 ensures even more accurate commencement determination if voice is detected before or within this time band. This detection causes the flag generator 36 to be set and provided the call is still in progress (as determined by hook switch 28) then this causes control 38 to assume start of call. Thus if speech is detected between zero period and $T_1$ then speech actuates start control. If $T_1$ occurs before speech then this actuates start control, but should speech be detected between $T_1$ and $T_2$ then the counter is reset and charges start from that point. In this way any individual call will be started at worst at the mean time, and at best at the detection of speech which is assumed to be the start of a call.

The units charged, as available from computation unit 19 of Figure 1 can be passed to a multiplier 23 should it be necessary to have an increased charge which reflects overheads or the like for office use. The indicated cost is made available to display 22 - e.g., LCD. The system can begin to indicate the cost of the call a fixed time after call commencement (e.g.,

30 seconds after ringing commences) and the accumulated cost continually increments as the call progresses. Provision of a printer will allow hard copy to be available to provide a permanent copy of the call cost.

The requirements for code conversion table 12 are such that it must provide the correct code from information derived from the number information received. Whilst international calls will have a constant coding from anywhere in the UK, a number dialled within the UK may be deemed a local call in some areas or a long distance call dependent on where you are ringing from.

One approach to this problem could be to make the storage capacity of the conversion table 12 sufficient to store all the code relationships from every exchange to any dialled number throughout the world, but this would require a very large store (e.g., 1/2 Megabit). The size and cost of such a unit, at present, makes it unsuitable other than in very expensive systems.

A second approach is to arrange for a small store to be provided which operates as a stacking mechanism. In such an arrangement the store retains a limited number of codes and charge letters (indices) corresponding to the calling pattern of the user. The most recently called codes are stored or restored and the least recent are removed from the memory. This drawback, dependent on store size, prevents a really comprehensive system being provided.

Another approach is to reduce the codes conversion requirement by making coding assumptions so that only a limited code conversion store is required. Thus taking the stripped code, it is assumed that whenever the first digit $\leqslant 9$, this is a local call and the appropriate charge letter is produced. A further assumption is that whenever a zero is produced for the first digit this is taken to be a maximum rate call. International calls (010) require only a few storage locations for conversion to the current charge band. Whilst this system is generally satisfactory, because of the UK exchange structure, some numbers start with zero which are in fact local exchanges, so some errors can arise in call costs calculated.

A preferred embodiment now described, provides enhanced performance whilst keeping the memory reasonably small (e.g., 1K x 4 bit) as now described with reference to Figure 3.

The conversion table unit 12 is provided by memory 30 with associated address control 32. We have found that the stripped digits associated with national calls which are assigned call letters can be used to define the memory address via control 32. Control 32 prevents local calls with a first digit $\leqslant 9$ from going across to the memory and a simple local signal (e.g., 4 bit word) is provided for passage to the computation unit 19. Local calls starting with zero, pass via the address block to access the relevant memory location. Thus called exchange 0234 will cause location 234 to be accessed and the digital information equivalent to L (say) will be output for computation. In this way no local call cost errors are generated. The information available for read out is still retained by the memory after the readouts stop.

Similarly other exchange codes access their equivalent memory address (e.g., 0273 goes to address 273) where the pertinent charge letter is stored.

International calls, after code stripping operate in a similar way, although the address control 32 may use internal manipulation to route the code to the memory address holding the relevant charge band information where necessary due to there being no equivalent memory address. Thus code 01031 when stripped becomes 1031 and this could be converted to address 31 say which would not be used for national calls.

The UK exchanges however are typically used as the memory address information.

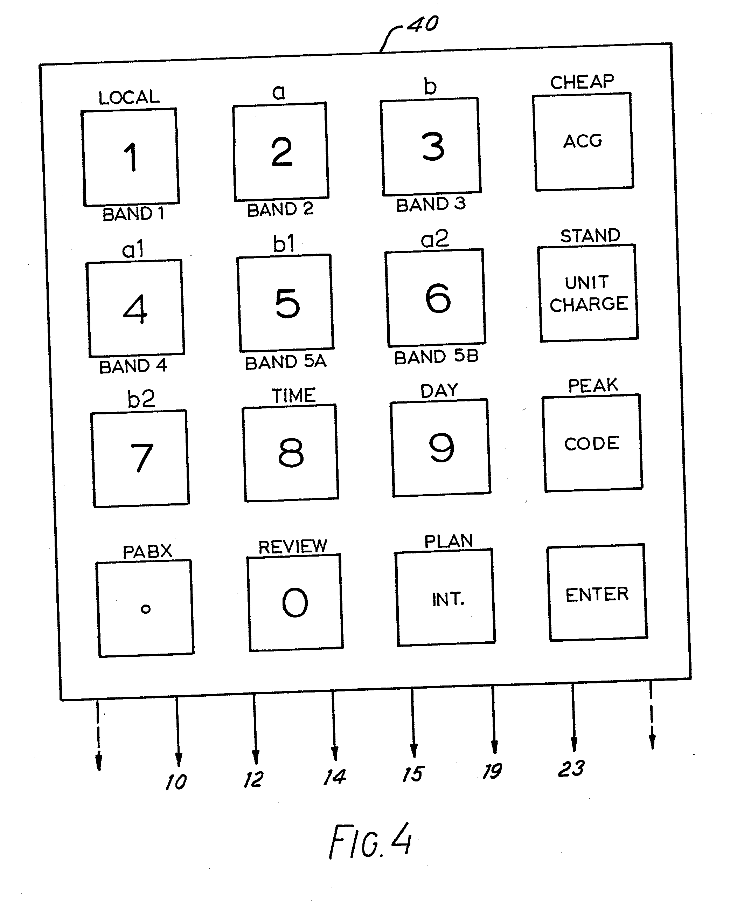

The code information stored in table 12 could be provided during manufacture using a ROM for example, but the destination of the unit would have to be known to ensure the correct exchange relationships. An alternative approach, which is preferable, is to provide a purchaser with a list for entry into the RAM via the keyboard, or the purchaser can make use of the telephone code book provided to subscribers to provide the data base for entry. The standard keyboard can be modified by adding keys and sharing functions as shown in keyboard 40 of Figure 4. Thus the standard 10 digits are provided and charge bands and letters are indicated also as well as time setting data. Code selection and entry keys may also be provided to select setting or entry functions.

The keyboard output is used to provide information to the various blocks of Figure 1. Thus keyboard selection of a desired party's number will be received by block 10. Entry of data to the tables 12, 15 or 19 charge multiplication factor is effected by appropriate key selection. Setting of data and time is similarly carried out. Additional keys may be provided for further functions as desired. For example, accummulated call costs can be calculated and displayed by actuating the ACC button. After a predetermined period from actuation of this or other specified buttons, the display can revert to time clock display. Stored codes can be reviewed by pressing the REVIEW button. The PLAN button allows calls within certain time periods or charge bands, once a plan is chosen, to thereafter be prevented from connection completion.

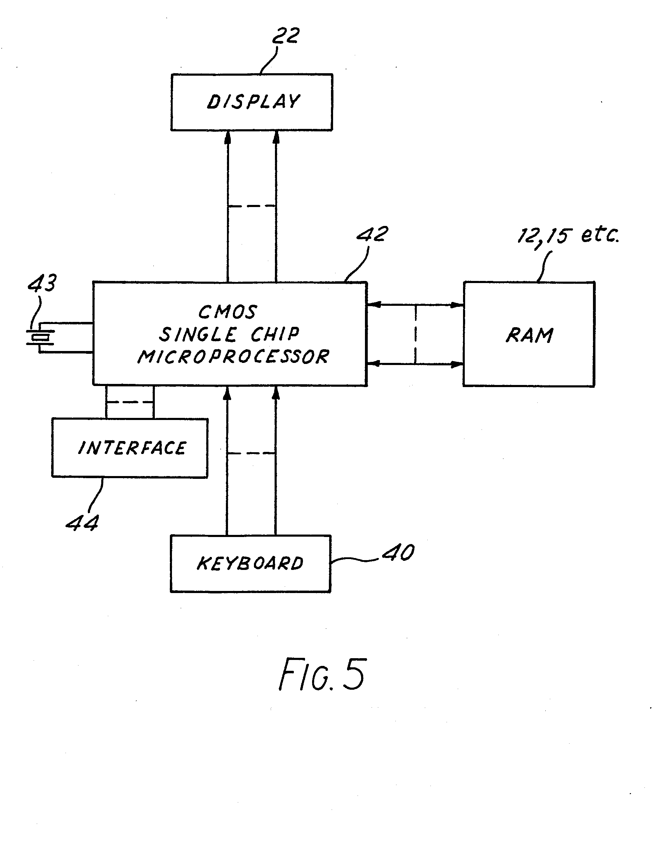

Although the system has been described in terms of hardware realisation in practice micro-processor techniques can expediently be employed for flexibility and a suitable arrangement is shown in Figure 5. The single chip CMOS processor 42 is now the heart of the unit and external crystal 43 provides the basis for the clock and timing functions. The memories 12, 15 and so on can all be provided within the RAM chip shown which includes data and address lines to and from the micro-processor. The accumulation, review and plan operations just referred to are easily implemented in the microprocessor without requiring major additions to the hardware. By means of interface 44 the microprocessor system can be made aware of ringing and speech, end of call or other requirements detected.

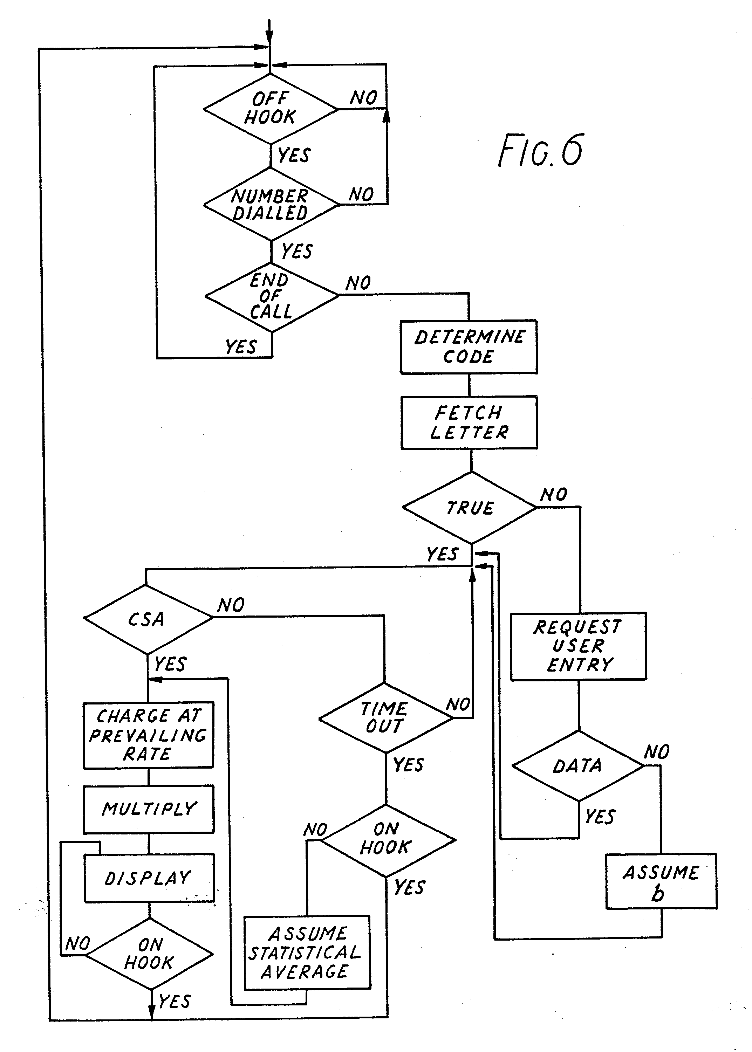

A typical sequence pre-programmed on chip in the micro-processor is shown in the flow chart of Figure 6, which generally follows the sequence of the Figure 1 configuration. The 'request' step, however, is provided to allow the subscriber in effect to enter codes over a period. In other words, there is not an absolute requirement to enter in all the codes at one time. The memory is scanned when 'dialling' a particular exchange. If the pertinent charge code information has not yet been entered a flashing indicator on the display for example will indicate that the relevant charge letter is to be entered. If no data is entered it will assume that the call is appropriate to the 'b' charge letter (which the majority of calls will be, remembering that local calls are not accessed to the memory). Once entered, data is retained. In practice all the relevant memory locations associated with national charges can be preprogrammed with the 'b' charge letter. The user entry request of Figure 6 can prompt the user to replace this letter by the actual letter associated with that exchange using keyboard 40 of Figure 4. The user presses the 'CODE' button, then the relevant digits for the exchange and then the 'ENTER' button. The displayed charge code or letter can then be updated by pressing the relevant charge or band button followed by the 'ENTER' button. This replaces the information in memory block 30 of Figure 2, access being shown by the address location and charge code data inputs. If the charge data is not replaced, the device will assume that 'b' is the pertinent charge letter, as shown by the Figure 6 flowchart.

Data concerning setting of the clock and other functions is also manually entered by pressing the relevant buttons. The user programmability of the various variables allows great flexibility and utility by following simple procedural steps, aided by the keyboard markings. Memory power back-up is expediently provided should the normal power source fail to avoid having to re-enter the data. Low battery warning can be provided.

The flexibility of the micro-processor system allows additional functions to be readily accommodated. Thus security code entry can be made a requirement for memory alteration. The display can also operate as a clock when not involved with call computation.

Because charge codes and times are available the system can be made to inhibit or control operation such that only local calls can be made all the time, with restrictions to other calls to off peak periods for example as mentioned above.

High cost calls can produce additional display indication, such as flashing display to provide greater warning even employing audible notification if desired with additional components.

Accumulated costs of calls over a given period can also be calculated and displayed.

Repertory dialling and number storage facilities could also be incorporated if desired.

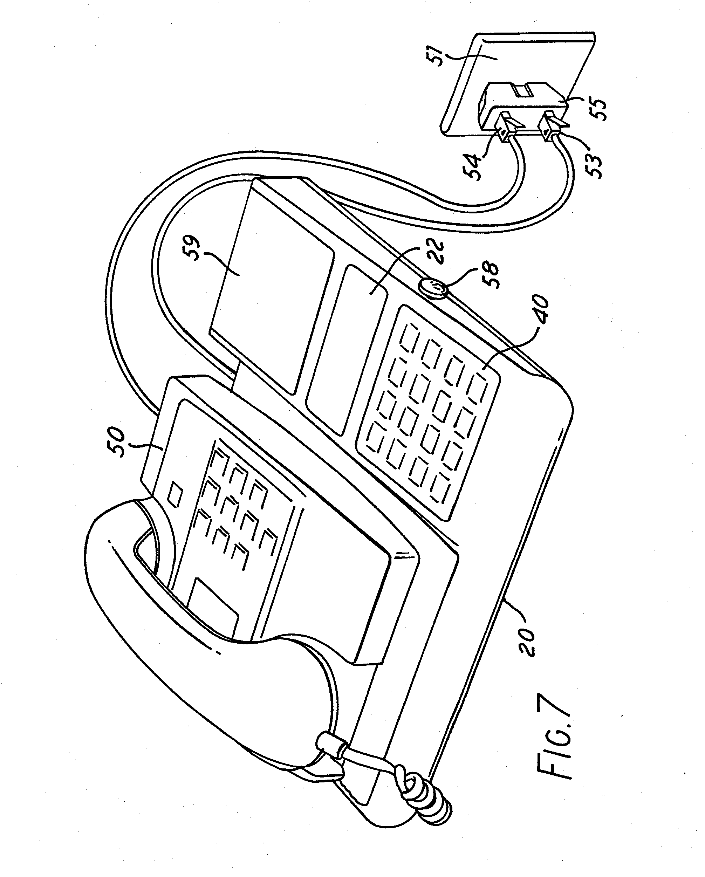

Where the unit represented by Figure 1 for example is fitted within the telephone instrument, and driven from internal batteries, the system is capable of installation directly into the standard telephone jack socket without the need for fitting by an engineer, nor modification at the exchange end of the line. Alternatively, the unit could comprise an add on device for the standard telephone as shown in Figure 7.

Here keyboard 40 is kept separate from the standard keyboard in telephone instrument 50 associated with actual dialling. As the hook switch in this configuration is actually in the telephone instrument 50, the hook switch 28 of Figure 1 is in practice provided by a threshold detector which detects the line or excitation voltage to give the equivalent 'on hook' signal, detected from the line. The Figure 1 arrangement in other aspects is provided within housing 20. Where the microprocessor based system of Figure 5 is employed, detected signals from the plus connector 53 has access to the microprocessor system 42 via interface 44.

Both the call cost indicator unit 20 and the telephone instrument 50 can be plugged into the standard socket 51 by use of standard plugs 53 and 54 respectively.

Where socket 51 is only a single socket a standard dual socket adaptor 55 can be employed. No visit by an engineer is required. The telephone connection and the call cost indicator connection are thus made in parallel to the telephone line so that the call cost indicator has access to line signals without difficulty. A key operated switch 58 may be provided in the housing to enable only access to an authorised user to update the data via the keyboard, without preventing normal calculation to non-authorised users.

The inserted key may be supplemented by a unique code which has to be entered via the keyboard before access is gained.

An instruction list may be affixed to area 59 of the housing to aid user programming. The markings on the keyboard make this operation very simple.

The system allows the user to input data for use as look up tables, or if the need arises to modify data in response to changes in the tariff structure under which the device is operated, the time bands and allocations for different call categories, being identified by codes used by the pertinent national telephone network so as to be understood easily by the user.

Other variables such as code designation, or the unit charge can be entered, again in accordance with the current charging policy. Alternatively, a premium or subsidy factor can be applied if the owner wishes to affect the calling pattern by artificially increasing or decreasing the effective charge.

The UK network terminology is applied in the examples described. To enter or view a call time allowance, by keying in 'local, cheap', the time corresponding to a local cheap rate call will be displayed. This may then be re-entered or altered by keying in the new data and ending with 'ENTER'.

Other data such as time, day, unit charge, time bands for cheap, standard and peak calls, time

allocations and code details can all be entered in this manner, identified by the normal terminology.

Thus the user has control over all the variables which are needed to calculate the cost of a call. Although the example has been described employing the terms associated with the UK telephone system, the terms could be modified as necessary to be compatible with other networks and in circumstances where the unit is to be used elsewhere.

CLAIMS:

1.  A telephone indicator system associated with call costs and comprising:-

    means (10, 11) for receiving information pertaining to a telephone number dialled;

    means (12) for determining from said number information, the relevant charge code associated with said number;

    means (14, 15) for identifying the current charge rate pertaining to that time of day;

    means (17) for monitoring the duration of said call;

    means (19) for computing the estimated cost pertaining to that call;

    means (22) for producing an indication related to the call cost, and wherein said charge determining means includes a memory (30) having a plurality of storage locations for retaining information pertaining to the relevant charge codes obtaining for the time being, said memory addresses being arranged whereby at least some location addresses correspond to and are defined by at least part of the number sequence taken from the dialled telephone number.

2.  A system as claimed in Claim 1, wherein an address control (32) is provided to re-route the number sequence where no corresponding address in the memory is available.

3. A system as claimed in Claim 1 or 2, including a keyboard (40), said memory being adapted to store an entered charge code at each pertinent address and accessible for modification via the keyboard.

4. A system as claimed in Claim 3, wherein the memory comprises a RAM (30) having an address capacity not substantially exceeding on thousand storage address locations each for storing the codes in digital form and each location being capable of storing more than one digit.

5. A system as claimed in any one of Claims 1 to 4, wherein said means for monitoring the call includes a first detector (27) for determining voice presence to initiate commencement of duration determination, actuator means (17) for initiating commencement of duration determination after a predetermined period in the absence of voice detection, and a second detector (28) for determining termination of the call.

6. A system as claimed in Claim 5, wherein said first detector includes a filter (33) and a threshold device (34) for establishing voice presence.

7. A system as claimed in Claim 5 or 6, including means (37) for providing an upper and lower time limit for said predetermined period whereby commencement of duration determination by said actuator means on arrival of said lower time limit can be overridden if speech is detected prior to arrival of said second time limit.

8. A system as claimed in Claim 7, including a counter (35) and a comparator (37) for determining the arrival of said upper and lower time limits.

9. A system as claimed in any one of Claims 1 to 8, wherein the means for receiving information includes a number stripper (11) for separating the more significant digits from the incoming telephone number information.

10. A system as claimed in any one of Claims 1 to 9, wherein the indication means comprises a visual display (22) and said computation means is configured so as to provide periodically updated call cost indication during actual progress of the telephone call.

11. A system as claimed in Claim 10, wherein said computation means is configured so as to provide accumulated cost information on a sequence of separate telephone calls.

12. A system as claimed in Claim 10 or 11, including an internal clock generator (14) for providing time of day information for said identifying means and for display on said visual display when cost information is not being displayed.

13. A system as claimed in Claim 10, 11 or 12, wherein multiplier means (23) are provided for increasing the cost computation by a predetermined coefficient.

14. A system as claimed in any one of Claims 1 to 13, including user accessible means (40) for modifying selected information used in the cost calculation.

15. A system as claimed in Claim 14 including authorising means (58) for allowing modification access only after correct actuation of said authorising means.

16. A system as claimed in any one of Claims 1 to 15, wherein a microprocessor (42) is provided for interfacing to a keyboard (40) display (22) and memory (12) for operator to determine call costs from number information received.

17. A system as claimed in Claim 16, wherein the system is contained in a housing (20) separate to a telephone instrument and configured to be operated in conjunction therewith when connected in common therewith.

18. A system as claimed in Claim 16 wherein the system is configured to be contained in the telephone housing.

0115924

1/6

FROM TELEPHONE KEYBOARD
OR LINE INTERFACE

CONVERSION TABLE

NUMBER RECEIVER — 10

CODE | LETTER — 12

CODE STRIPPER — 11

L,a,b,b1 etc.

CLOCK UNIT — 14

TIME OF DAY
DAY OF WEEK

RATE TABLE — 15

EFFECTIVE RATE

COMPUTED UNITS TABLE — 19

TIME PULSES (EACH 0·1 SEC)

ELAPSED TIME — 25

RINGING DETECTOR — 26

UNIT CHARGE MULTIPLIER — 23

SPEECH DETECTOR — 27

START — 17

STOP

COST INDICATOR — 22

HOOK SWITCH OR DETECTOR — 28

DURATION CONTROL

FIG.1

TIME PULSES

FIG.2

FIG.3

LOCAL
(L)

DATA
ENTRY

ADDRESS
LOCATION

CHARGE
CODE DATA

0115924

FIG.4

FIG.5

FIG.6

FIG.7

0115924

**European Patent Office**

# EUROPEAN SEARCH REPORT

Application number

EP  84 30 0324

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | FR-A-2 481 034  (HEDIN) <br> * Whole document * | 1 | H 04 M  15/30 |
| A | | 10,16, 17 | |
| | --- | | |
| A | GB-A-2 047 505  (INTERNATIONAL STANDARD) <br> * Whole document * | 1,9 | |
| | --- | | |
| A | WO-A-8 201 634  (CONCEPTION REALISATION DEVELOPPEMENT ELECTRONIQUE) <br> * Page 7, line 19 - page 16, line 29; figures * | 1,3,10 -12,14 -17 | |
| | ----- | | TECHNICAL FIELDS SEARCHED (Int. Cl. 3) |
| | | | H 04 M |

The present search report has been drawn up for all claims

| Place of search THE HAGUE | Date of completion of the search 09-04-1984 | Examiner KEPPENS P.M.R. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82